# EUROPEAN PATENT APPLICATION

(11) **EP 4 586 681 A1**
(43) Date of publication of application: **16.07.2025**
(21) Application number: 23881573.2
(22) Date of filing: 26.09.2023
(51) Int. Cl.: H04W 28/02

(54) **DATA TRANSMISSION METHOD AND APPARATUS**

(30) Priority: 24.10.2022 CN 202211305753
(71) Applicant: Huawei Technologies Co., Ltd., Shenzhen, Guangdong 518129 (CN)
(72) Inventor: HUI, Shaobo, Shenzhen, Guangdong 518129 (CN)
(74) Representative: Goddar, Heinz J.
(86) International application number: PCT/CN2023/121557
(87) International publication number: WO 2024/087994

(57) **Abstract**

This application provides a data transmission method and an apparatus, and may be applied to a wireless local area network system that supports 802.11 series protocols such as a next-generation Wi-Fi protocol of IEEE 802.1 1ax, for example, 802.11be, Wi-Fi 7, or EHT, and a next-generation protocol of 802.11be or Wi-Fi 8. According to the method, before a transmit device sends a to-be-sent data frame, the transmit device first sends a preemption frame, where the preemption frame includes first indication information used to determine first duration. After the transmit device sends the preemption frame, if a time period for which a channel keeps idle reaches a preset time period, the transmit device sends the to-be-sent data frame, to ensure timely sending of the data frame, so as to reduce a data transmission delay.

## Description

This application claims priority to Chinese Patent Application No. 202211305753.4, filed with the China National Intellectual Property Administration on October 24, 2022, and entitled "DATA TRANSMISSION METHOD AND APPARATUS", which is incorporated herein by reference in its entirety.

### TECHNICAL FIELD

Embodiments of this application relate to the communication field, and more specifically, to a data transmission method and an apparatus.

### BACKGROUND

Interference between Wi-Fi devices (for example, access points (access points, APs) and/or stations (stations, STAs)) is air interface resource preemption interference. To be specific, a plurality of Wi-Fi devices share a radio frequency air interface resource in a same space range, and when the plurality of Wi-Fi devices all need to send data, the plurality of Wi-Fi devices preempt the radio frequency air interface resource according to a protocol, resulting in a conflict between the plurality of Wi-Fi devices. This affects data transmission timeliness, prolongs a data transmission delay, or causes a packet loss.

### SUMMARY

This application provides a data transmission method and an apparatus, to reduce a data transmission delay.

According to a first aspect, a data transmission method is provided. The method may be performed by a transmit device, or may be performed by a component (for example, a chip or a circuit) of the transmit device. This is not limited. For ease of description, an example in which the method is performed by the transmit device is used for description below.

The method includes: A transmit device sends a preemption frame, where the preemption frame includes first indication information used to determine first duration, and the first duration is a time period for which a device other than a first receive device keeps silent after receiving the preemption frame; and after the preemption frame is sent, the transmit device detects that a time period for which a channel is continuously idle reaches a preset time period and sends a data frame.

For example, the preemption frame is a management frame that does not require a positive acknowledgement (acknowledgement, ACK) response. For example, the preemption frame may be a clear to send (clear to send, CTS) frame.

For example, the data frame is a low-delay data frame.

Based on the foregoing technical solution, before the transmit device sends a to-be-sent data frame, the transmit device first sends the preemption frame, and the preemption frame includes the first indication information used to determine the first duration. After the transmit device sends the preemption frame, if a time period for which a channel keeps idle reaches the preset time period, the transmit device sends the to-be-sent data frame, to ensure timely sending of the data frame, so as to reduce a data transmission delay.

For example, in a process in which the transmit device sends the preemption frame, if the channel is idle, another device may not occupy the channel in the first duration based on the first indication information in the preemption frame, to ensure that after sending the preemption frame, the transmit device can detect that a time period for which the channel keeps idle since an end moment of sending the preemption frame reaches the preset time period, so as to send the data frame in time.

For another example, in a process in which the transmit device sends the preemption frame, if the channel is busy, the preemption frame may collide with a data frame or a management frame that is being sent by another device, so that it can be detected that a time period for which the channel keeps idle since an end moment at which the another device sends the data frame or the management frame reaches the preset time period, to send the data frame in time. In other words, when the preemption frame collides with the another device, in a process in which the another device waits for retransmission, the transmit device may successfully preempt the channel, to send the to-be-sent data frame in time.

For example, the preset time period is a short interframe space (short interframe space, SIFS), or a first time period is a point coordination function interframe space (point coordination function interframe space, PIFS), or the first time period is a distributed coordination function interframe space (distributed coordination function interframe space, DIFS), or another preset time period.

For example, the first duration is not less than a sum of a sending time period of the preemption frame and the first time period. Optionally, if the sending time period of the preemption frame is extremely short, the first duration may be determined without considering the sending time period during actual implementation.

Based on the foregoing technical solution, if the first duration is not less than the sum of the sending time period of the preemption frame and the first time period, the another device keeps silent in the process in which the transmit device sends the preemption frame, and keeps silent in the first time period after the transmit device sends the preemption frame. After the another device ends silence and the another device detects that the time period for which the channel is continuously idle reaches at least the preset time period, the another device successfully preempts the channel. In other words, after the transmit device sends the preemption frame, the time period for which the channel keeps idle is not less than a sum of the first time period and the preset time period. After the transmit device sends the preemption frame, the time period for which the channel keeps idle is not less than the sum of the first time period and the preset time period. Therefore, after sending the preemption frame, the transmit device may immediately detect that the channel keeps idle in the preset time period, so that the transmit device can send the data frame in time.

In a possible implementation, the first indication information indicates the first duration. In this implementation, the first time period may be any time period. For example, the first time period is an SIFS, or the first time period is a PIFS, or the first time period is a DIFS or another preset time period.

In another possible implementation, the first indication information indicates the sending time period of the preemption frame. In this implementation, the first time period may be pre-configured in the device other than the first receive device in coverage of the transmit device. The first time period may be predefined in a protocol or a standard. For example, the first time period is an SIFS, or the first time period is a PIFS, or the first time period is a DIFS or another preset time period.

For example, the first indication information is carried in a duration field of the preemption frame.

Optionally, the preemption frame further includes a destination address, and the destination address includes an address of the first receive device.

Based on the foregoing technical solution, after receiving the preemption frame, the device other than the first receive device in the coverage of the transmit device may determine the first duration based on the first indication information included in the preemption frame when the destination address of the preemption frame is different from an address of the local device, and keep silent in the first duration, so that the transmit device can send the data frame in time.

With reference to the first aspect, in some implementations of the first aspect, that a transmit device sends a preemption frame includes: The transmit device sends the preemption frame if a waiting time period of the data frame on the transmit device reaches a preset time period.

With reference to the first aspect, in some implementations of the first aspect, that a transmit device sends a preemption frame includes: The transmit device sends the preemption frame if a waiting time period of the data frame on the transmit device reaches N preset time periods, and a time period for which a channel is continuously idle in each of the N preset time periods is less than the preset time period, where N is a positive integer.

In other words, when the transmit device preempts the channel based on the preset time period, if the transmit device fails to preempt the channel N consecutive times, the transmit device sends the preemption frame. That the transmit device preempts the channel based on the preset time period means that if the transmit device detects that the time period for which the channel is continuously idle reaches the preset time period, it indicates that the transmit device successfully preempts the channel; or if the transmit device detects that the time period for which the channel is continuously idle is less than the preset time period, it indicates that the transmit device fails to preempt the channel.

With reference to the first aspect, in some implementations of the first aspect, the data frame includes second indication information used to determine second duration, and the second duration is a time period for which a device other than the first receive device keeps silent after receiving the data frame.

For example, the second duration is not less than a time period of a space between a start moment at which the transmit device sends the data frame and a start moment at which the transmit device receives a response frame; or the second duration is not less than a time period of a space between the start moment at which the transmit device sends the data frame and an end moment at which the transmit device sends an acknowledgment frame, where the response frame responds to the data frame, and the acknowledgment frame is an acknowledgment frame for the response frame.

Based on the foregoing technical solution, if the data frame sent by the transmit device includes the second indication information, the another device may keep silent in the second duration, to ensure that the first receive device can send the response frame to the transmit device in time, so as to implement low-delay interaction between the transmit device and the first receive device.

In a possible implementation, the second indication information indicates the second duration.

In another possible implementation, the second indication information indicates a sending time period of the data frame. In this implementation, the device other than the first receive device in the coverage of the transmit device may determine the second duration based on a sum of the sending time period of the data frame and a second time period. The second time period may be pre-configured in the device other than the first receive device in the coverage of the transmit device. Alternatively, the second time period may be predefined in a protocol or a standard.

For example, the second indication information is carried in a duration field of the data frame.

According to a second aspect, a data transmission method is provided. The method may be performed by a first receive device, or may be performed by a component (for example, a chip or a circuit) of the first receive device. This is not limited. For ease of description, an example in which the method is performed by the first receive device is used for description below.

The method includes: A first receive device receives a preemption frame, where the preemption frame includes first indication information used to determine first duration, and the first duration is a time period for which a device other than the first receive device keeps silent after receiving the preemption frame; and the first receive device receives a data frame after receiving the preemption frame.

For beneficial effects of the second aspect or any one of the possible implementations of the second aspect, refer to the first aspect.

With reference to the second aspect, in some implementations of the second aspect, the first duration is not less than a sum of a sending time period of the preemption frame and a first time period.

With reference to the second aspect, in some implementations of the second aspect, the first time period is any one of a PIFS or another preset time period.

With reference to the second aspect, in some implementations of the second aspect, the first indication information indicates the first duration.

With reference to the second aspect, in some implementations of the second aspect, the first indication information indicates the sending time period of the preemption frame.

With reference to the second aspect, in some implementations of the second aspect, the first indication information is carried in a duration field of the preemption frame.

With reference to the second aspect, in some implementations of the second aspect, the preemption frame includes a destination address, and the destination address includes an address of the first receive device.

With reference to the second aspect, in some implementations of the second aspect, the method further includes: The first receive device sends a response frame in response to the data frame.

With reference to the second aspect, in some implementations of the second aspect, the data frame includes second indication information used to determine second duration, and the second duration is a time period for which a device other than the first receive device keeps silent after receiving the data frame.

With reference to the second aspect, in some implementations of the second aspect, the second duration is not less than a time period of a space between a start moment at which the transmit device sends the data frame and a start moment at which the transmit device receives a response frame; or the second duration is not less than a time period of a space between the start moment at which the transmit device sends the data frame and an end moment at which the transmit device sends an acknowledgment frame, where the response frame responds to the data frame, and the acknowledgment frame is an acknowledgment frame for the response frame.

With reference to the second aspect, in some implementations of the second aspect, the second indication information is carried in a duration field of the data frame.

According to a third aspect, a silent time period determining method is provided. The method may be performed by a second receive device, or may be performed by a component (for example, a chip or a circuit) of the second receive device. This is not limited. For ease of description, an example in which the method is performed by the second receive device is used for description below.

The method includes: A second receive device receives a preemption frame, where the preemption frame includes first indication information used to determine first duration, and the first duration is a time period for which a device other than a first receive device keeps silent after receiving the preemption frame; and the second receive device keeps silent in the first duration determined based on the first indication information.

For beneficial effects of the third aspect or any one of the possible implementations of the third aspect, refer to the first aspect.

With reference to the third aspect, in some implementations of the third aspect, the first duration is not less than a sum of a sending time period of the preemption frame and a first time period.

With reference to the third aspect, in some implementations of the third aspect, the first time period is any one of a PIFS or another preset time period.

With reference to the third aspect, in some implementations of the third aspect, the first indication information indicates the first duration.

With reference to the third aspect, in some implementations of the third aspect, the first indication information indicates the sending time period of the preemption frame; and that the second receive device keeps silent in the first duration determined based on the first indication information includes: The second receive device keeps silent in the first duration determined based on the first indication information and the first time period.

With reference to the third aspect, in some implementations of the third aspect, the first indication information is carried in a duration field of the preemption frame.

With reference to the third aspect, in some implementations of the third aspect, the preemption frame includes a destination address, the destination address includes an address of the first receive device, and that the second receive device keeps silent in the first duration determined based on the first indication information includes: The second receive device keeps, based on that the destination address is the address of the first receive device different from an address of the second receive device, silent in the first duration determined based on the first indication information.

With reference to the third aspect, in some implementations of the third aspect, the method further includes: The second receive device receives a data frame, where the data frame includes second indication information used to determine second duration, and the second duration is a time period for which a device other than the first receive device keeps silent after receiving the data frame; and the second receive device keeps silent in the second duration determined based on the second indication information.

With reference to the third aspect, in some implementations of the third aspect, the second duration is not less than a time period of a space between a start moment at which a transmit device sends the data frame and a start moment at which the transmit device receives a response frame; or the second duration is not less than a time period of a space between the start moment at which the transmit device sends the data frame and an end moment at which the transmit device sends an acknowledgment frame, where the response frame responds to the data frame, and the acknowledgment frame is an acknowledgment frame for the response frame.

With reference to the third aspect, in some implementations of the third aspect, the second indication information is carried in a duration field of the data frame.

According to a fourth aspect, a communication apparatus is provided. The apparatus includes a monitoring unit and a transceiver unit. The transceiver unit is configured to send a preemption frame, where the preemption frame includes first indication information used to determine first duration, and the first duration is a time period for which a device other than a first receive device keeps silent after receiving the preemption frame; after the preemption frame is sent, the monitoring unit is configured to detect that a time period for which a channel is continuously idle reaches a preset time period; and the transceiver unit is further configured to send a data frame.

With reference to the fourth aspect, in some implementations of the fourth aspect, the first duration is not less than a sum of a sending time period of the preemption frame and a first time period.

With reference to the fourth aspect, in some implementations of the fourth aspect, the first time period is any one of a PIFS or another preset time period.

With reference to the fourth aspect, in some implementations of the fourth aspect, the first indication information indicates the first duration.

With reference to the fourth aspect, in some implementations of the fourth aspect, the first indication information indicates the sending time period of the preemption frame.

With reference to the fourth aspect, in some implementations of the fourth aspect, the first indication information is carried in a duration field of the preemption frame.

With reference to the fourth aspect, in some implementations of the fourth aspect, the preemption frame includes a destination address, and the destination address includes an address of the first receive device.

With reference to the fourth aspect, in some implementations of the fourth aspect, the transceiver unit is specifically configured to send the preemption frame if a waiting time period of the data frame on a transmit device reaches a preset time period.

With reference to the fourth aspect, in some implementations of the fourth aspect, the transceiver unit is specifically configured to send the preemption frame if a waiting time period of the data frame on a transmit device reaches N preset time periods, and a time period for which a channel is continuously idle in each of the N preset time periods is less than the preset time period, where N is a positive integer.

With reference to the fourth aspect, in some implementations of the fourth aspect, the preset time period is any one of a PIFS or another preset time period.

With reference to the fourth aspect, in some implementations of the fourth aspect, the data frame includes second indication information used to determine second duration, and the second duration is a time period for which a device other than the first receive device keeps silent after receiving the data frame.

With reference to the fourth aspect, in some implementations of the fourth aspect, the second duration is not less than a time period of a space between a start moment of sending the data frame and a start moment of receiving a response frame; or the second duration is not less than a time period of a space between the start moment of sending the data frame and an end moment of sending an acknowledgment frame, where the response frame responds to the data frame, and the acknowledgment frame is an acknowledgment frame for the response frame.

With reference to the fourth aspect, in some implementations of the fourth aspect, the second indication information is carried in a duration field of the data frame.

With reference to the fourth aspect, in some implementations of the fourth aspect, the preemption frame is a management frame that does not require an ACK response.

In an implementation, the apparatus is the transmit device. When the apparatus is a transmit device, the transceiver unit may be a transceiver or an input/output interface, and the monitoring unit may be at least one processor. Optionally, the transceiver may be a transceiver circuit. Optionally, the input/output interface may be an input/output circuit.

In another implementation, the apparatus is a chip, a chip system, or a circuit used in the transmit device. When the apparatus is the chip, the chip system, or the circuit used in the transmit device, the transceiver unit may be an input/output interface, an interface circuit, an output circuit, an input circuit, a pin, a related circuit, or the like on the chip, the chip system, or the circuit, and the monitoring unit may be at least one processor, processing circuit, logic circuit, or the like.

According to a fifth aspect, a communication apparatus is provided, including a transceiver unit. The transceiver unit is configured to receive a preemption frame, where the preemption frame includes first indication information used to determine first duration, and the first duration is a time period for which a device other than a first receive device keeps silent after receiving the preemption frame; and after the preemption frame is received, the transceiver unit is further configured to receive a data frame.

With reference to the fifth aspect, in some implementations of the fifth aspect, the preemption frame includes a destination address, and the destination address includes an address of the first receive device.

With reference to the fifth aspect, in some implementations of the fifth aspect, the transceiver unit is further configured to send a response frame in response to the data frame.

In an implementation, the apparatus is the first receive device. When the apparatus is the first receive device, the transceiver unit may be a transceiver or an input/output interface. Optionally, the apparatus may further include a processing unit, and the processing unit may be at least one processor. Optionally, the transceiver may be a transceiver circuit. Optionally, the input/output interface may be an input/output circuit.

In another implementation, the apparatus is a chip, a chip system, or a circuit used in the first receive device. When the apparatus is a chip, a chip system, or a circuit used in the first receive device, the transceiver unit may be an input/output interface, an interface circuit, an output circuit, an input circuit, a pin, a related circuit, or the like on the chip, the chip system, or the circuit. The processing unit may be at least one processor, processing circuit, logic circuit, or the like.

According to a sixth aspect, a communication apparatus is provided, including a transceiver unit and a processing unit. The transceiver unit is configured to receive a preemption frame, where the preemption frame includes first indication information used to determine first duration, and the first duration is a time period for which a device other than a first receive device keeps silent after receiving the preemption frame; and the processing unit is configured to keep silent in the first duration determined based on the first indication information.

With reference to the sixth aspect, in some implementations of the sixth aspect, the first duration is not less than a sum of a sending time period of the preemption frame and a first time period.

With reference to the sixth aspect, in some implementations of the sixth aspect, the first time period is any one of a PIFS or another preset time period.

With reference to the sixth aspect, in some implementations of the sixth aspect, the first indication information indicates the first duration.

With reference to the sixth aspect, in some implementations of the sixth aspect, the first indication information indicates the sending time period of the preemption frame; and the processing unit is specifically configured to keep silent in the first duration determined based on the first indication information and the first time period.

With reference to the sixth aspect, in some implementations of the sixth aspect, the first indication information is carried in a duration field of the preemption frame.

With reference to the sixth aspect, in some implementations of the sixth aspect, the preemption frame includes a destination address, the destination address includes an address of the first receive device, and the processing unit is specifically configured to keep, based on that the destination address is the address of the first receive device different from an address of the local device, silent in the first duration determined based on the second indication information.

In an implementation, the apparatus is a second receive device. When the apparatus is the second receive device, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the second receive device. When the apparatus is a chip, a chip system, or a circuit used in the second receive device, the transceiver unit may be an input/output interface, an interface circuit, an output circuit, an input circuit, a pin, a related circuit, or the like on the chip, the chip system, or the circuit. The processing unit may be at least one processor, processing circuit, logic circuit, or the like.

According to a seventh aspect, a communication apparatus is provided. The apparatus includes at least one processor, configured to execute a computer program or instructions stored in a memory, to perform the method in the first aspect and any one of the possible implementations of the first aspect, or perform the method in the second aspect and any one of the possible implementations of the second aspect, or perform the method in the third aspect and any one of the possible implementations of the third aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a transmit device or a receive device.

In another implementation, the apparatus is a chip, a chip system, or a circuit of the transmit device or the receive device.

According to an eighth aspect, this application provides a processor, configured to perform the method provided in the first aspect, or configured to perform the method provided in the second aspect, or configured to perform the method provided in the third aspect.

Unless otherwise specified, or if operations such as sending, and obtaining/receiving related to the processor do not contradict an actual function or internal logic of the operations in related descriptions, the operations may be understood as operations such as outputting, receiving, and inputting of the processor, or operations such as sending and receiving performed by a radio frequency circuit and an antenna. This is not limited in this application.

According to a ninth aspect, a computer-readable storage medium is provided. The computer-readable storage medium stores program code for execution of a device. The program code is used to perform the method in the first aspect and any one of the possible implementations of the first aspect, or is used to perform the method in the second aspect and any one of the possible implementations of the second aspect, or is used to perform the method in the third aspect and any one of the possible implementations of the third aspect.

According to a tenth aspect, a computer program product including instructions is provided. When the computer program product is run on a computer, the computer is enabled to perform the method in the first aspect and any one of the possible implementations of the first aspect, or the computer is enabled to perform the method in the second aspect and any one of the possible implementations of the second aspect, or the computer is enabled to perform the method in the third aspect and any one of the possible implementations of the third aspect.

According to an eleventh aspect, a communication system is provided, including the transmit device and the first receive device. The transmit device is configured to perform the method in the first aspect and any one of the possible implementations of the first aspect, and the first receive device is configured to perform the method in the second aspect and any one of the possible implementations of the second aspect.

### BRIEF DESCRIPTION OF DRAWINGS

FIG. 1 is a diagram of a communication system to which an embodiment of this application is applicable;
FIG. 2 is a diagram of collision between data frames sent by different devices;
FIG. 3 is a diagram of occupying a channel by a device for a long time;
FIG. 4 is a diagram of a format of a CTS frame;
FIG. 5 is a schematic flowchart of a method according to an embodiment of this application;
FIG. 6 is a diagram of a method according to an embodiment of this application;
FIG. 7 is a diagram of a method according to an embodiment of this application;
FIG. 8 is a diagram of a method according to an embodiment of this application;
FIG. 9 is a diagram of a format of a data frame;
FIG. 10 is a diagram of a method according to an embodiment of this application;
FIG. 11 is a diagram of a structure of an apparatus according to an embodiment of this application;
FIG. 12 is a diagram of a structure of an apparatus according to an embodiment of this application;
FIG. 13 is a block diagram of an apparatus according to an embodiment of this application; and
FIG. 14 is a diagram of a chip system according to an embodiment of this application.

### DESCRIPTION OF EMBODIMENTS

The following describes technical solutions of embodiments in this application with reference to accompanying drawings.

Embodiments of this application may be applied to a wireless local area network (wireless local area network, WLAN). Currently, a standard used by the WLAN is the Institute of Electrical and Electronics Engineering (institute of electrical and electronics engineer, IEEE) 802.11 series. The WLAN may include a plurality of basic service sets (basic service set, BSS). Network nodes in the BSS are a station (station, STA) and an access point (access point, AP). Each BSS may include one AP and a plurality of STAs associated with the AP.

An AP in embodiments of this application may also be referred to as a wireless access point, a hotspot, or the like. The AP is an access point for a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge that connects a wired network and a wireless network. A main function of the AP is to connect wireless network clients together, and then connect the wireless network to the Ethernet. Specifically, the AP may be a device that supports the 802.11ax standard. Further, optionally, the AP may be a device that supports one or more WLAN standards such as 802.11ac, 802.11n, 802.11g, 802.11b, 802.11a, or a later version.

An STA in embodiments of this application may be a wireless communication chip, a wireless sensor, or a wireless communication terminal, for example, may be a mobile phone that supports a Wi-Fi communication function, a tablet computer that supports a Wi-Fi communication function, a set top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Optionally, the STA may support the 802.11ax standard. Further, optionally, the STA may support one or more WLAN standards such as 802.11ac, 802.11n, 802.11g, 802.11b, 802.11a, or a later version.

In this embodiment of this application, in an example structure, the STA or the AP includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. A specific structure of an execution entity of the method provided in embodiments of this application is not uniquely limited in the foregoing examples, provided that a program that records code of the method provided in embodiments of this application can be run to perform communication according to the method provided in embodiments of this application. For example, the method provided in embodiments of this application may be performed by a STA, an AP, or a functional module that is in a STA or an AP and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

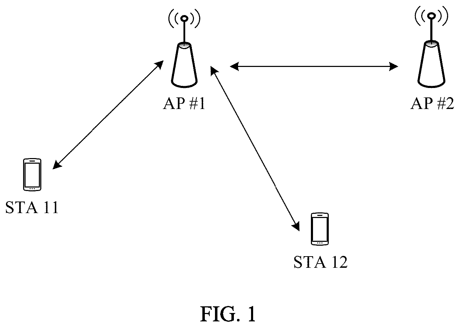

FIG. 1 is a diagram of a network architecture of a wireless local area network to which an embodiment of this application is applicable. As shown in FIG. 1, one AP may be associated with one or more STAs, that is, one AP may communicate with one or more STAs. As shown in FIG. 1, the network architecture of the wireless local area network may further include a plurality of APs, and different APs may also communicate with each other. For example, as shown in FIG. 1, the figure shows an AP #1, an AP #2, and a STA 11 and a STA 12 associated with the AP #1. Data transmission may be performed between the AP #1 and the STA 11 or the STA 12, data transmission may be performed between the STA 11 and the STA 12, and the AP #1 and the AP #2 may also communicate with each other.

It should be understood that FIG. 1 is merely an example, and the network architecture of the wireless local area network to which this application is applicable should not be limited. For example, the network architecture may further include more APs, and each AP may be associated with more STAs. This is not limited in embodiments of this application.

A type of interference between Wi-Fi devices (for example, APs and/or STAs) is air interface resource preemption interference. To be specific, a plurality of Wi-Fi devices share a radio frequency air interface resource in a same space range, and when the plurality of Wi-Fi devices all need to send data, the plurality of Wi-Fi devices preempt the radio frequency air interface resource according to a protocol, resulting in a conflict between the plurality of Wi-Fi devices. This affects data transmission timeliness, prolongs a data transmission delay, or causes a packet loss.

In the 802.11e, a concept of enhanced distributed channel access (enhanced distributed channel access, EDCA) is introduced, that is, different Wi-Fi devices each use a set of EDCA parameters to compete for a Wi-Fi channel, to obtain a transmission opportunity (transmission opportunity, TXOP). An EDCAparameter set includes a quality of service (quality of service, QoS) parameter set, and the QoS parameter set includes QoS parameters for different access categories (access categories, ACs). The access category may also be referred to as an access category. The access category includes: a background information access category (AC_background, AC_BK), a best effort access category (AC_best effort, AC_BE), a voice access category (AC_voice, AC_VO), and a video access category (AC_video, AC_VI). A QoS parameter (or referred to as an access channel configuration parameter) of each access category includes the following types: a maximum contention window (maximum contention window, CWmax), a minimum contention window (minimum contention window, CWmin), an arbitration interframe spacing number (arbitration interframe spacing number, AIFSN), and a transmission opportunity (transmission opportunity, TXOP) limit (limit).

Based on the concept of EDCA, a different value is set for the QoS parameter of each access category, so that low-delay services (for example, services of the AC_VO and the AC_VI) have more opportunities to access a channel, so as to reduce delays of the low-delay services. However, even if an EDCA parameter of a Wi-Fi device used to transmit the low-delay service is adjusted to make the Wi-Fi device successfully preempt a channel in a shorter time than another Wi-Fi device, low-delay data sent by the Wi-Fi device used to transmit the low-delay service may still collide with data sent by the another Wi-Fi device.

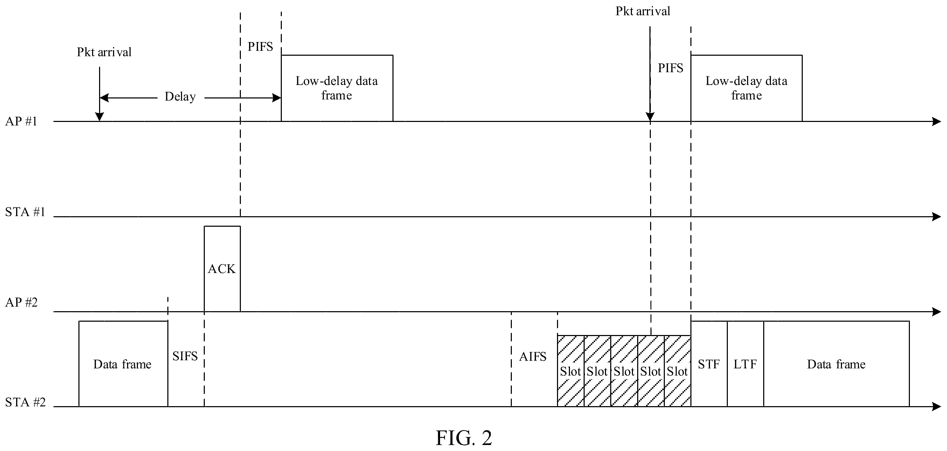

As shown in FIG. 2, after a low-delay data packet arrives at (packet arrival, Pkt arrival) the AP #1, if the AP #1 detects that a channel is idle, and a time period for which the channel is idle reaches a point coordination function interframe space (point coordination function interframe space, PIFS), the AP #1 starts to send a low-delay data frame. At a moment at which the AP #1 starts to send the low-delay data frame, the STA #2 adjacent to the AP #1 ends backoff and starts to send a data frame. In this case, the low-delay data frame sent by the AP #1 collides with the data frame sent by the STA #2.

In addition, a prerequisite for an EDCA parameter set to take effect is that a Wi-Fi device complies with a Wi-Fi multimedia (Wi-Fi multimedia, WMM) configuration. However, there is still a Wi-Fi device that does not comply with the WMM configuration. The Wi-Fi device that does not comply with the WMM configuration may send a long sequence of a short interframe space (short interframe space, SIFS) or the PIFS space, which occupies a channel for a long time. As a result, it is difficult for the Wi-Fi device used to send the low-delay data to successfully preempt the channel, and the Wi-Fi device cannot send the low-delay data in time.

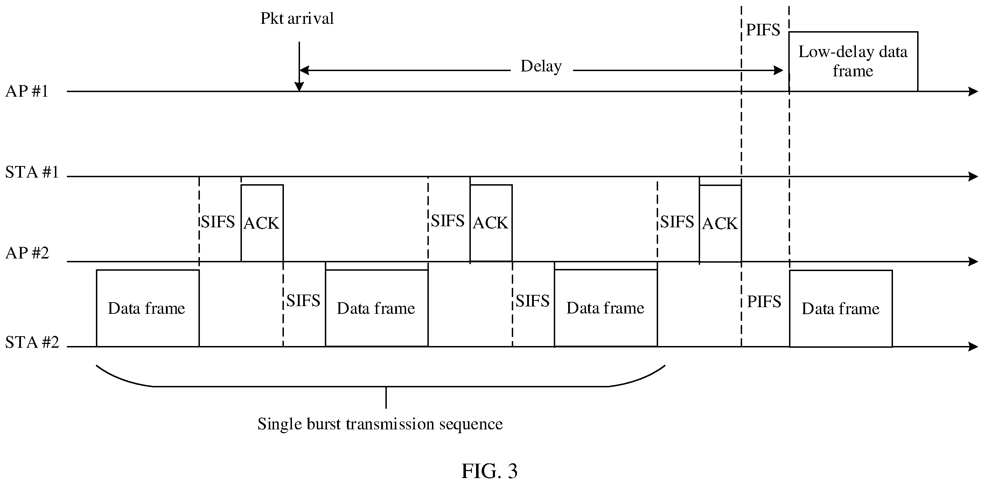

As shown in FIG. 3, at a moment at which a low-delay data packet arrives at the AP #1, the STA #2 adjacent to the AP #1 is sending a long sequence of an SIFS space, namely, a single burst (burst) transmission sequence including three data frames shown in FIG. 3. Because the STA #2 sends the long sequence of the SIFS space, the AP #1 can only back off all the time. Consequently, the AP #1 cannot send low-delay data in time.

As shown in FIG. 3, after the STA #2 sends the long sequence of the SIFS space and the AP #2 sends an ACK frame, the AP #1 detects that a channel is idle, and after detecting that a time period for which the channel is idle reaches a PIFS, the AP #1 sends the low-delay data. However, after the STA #2 sends the long sequence of the SIFS space and receives the ACK frame from the AP #2, the STA #2 may also start to detect the channel, and after detecting that a time period for which the channel is idle reaches the PIFS, the STA #2 continues to send a data frame, and therefore the data frame collides with the low-delay data sent by the AP #1. As a result, the AP #1 fails to send the low-delay data.

In view of this, embodiments of this application provide a data transmission method, to reduce a data transmission delay.

For ease of understanding embodiments of this application, the following briefly describes several terms in this application.

### 1. Interframe space (interframe space, IFS)

To avoid collision, the 802.11 protocol stipulates that after completing sending, a device needs to wait for a short period of time before sending a next frame. This period of time is called an interframe space. The interframe space depends on a type of a frame to be sent by the device. A frame with a high priority needs to wait for a short time, and therefore may first obtain sending permission; but a frame with a low priority usually needs to wait for a long time.

Interframe spaces are sorted in ascending order as follows:
(1) Short interframe space (short interframe space, SIFS);
(2) Point coordination function interframe space (point coordination function interframe space, PIFS);
(3) Distributed coordination function interframe space (distributed coordination function interframe space, DIFS);
(4) Arbitration interframe space (arbitration interframe space, AIFS); and
(5) Extended interframe space (extended interframe space, EIFS).

### 2. Carrier sense mechanism:

The carrier sense mechanism may be classified into a physical carrier sense mechanism and a virtual carrier sense (virtual carrier sense) mechanism.
(1) The physical carrier sense mechanism is also referred to as clear channel assessment (clear channel assessment, CCA). In a wireless communication system, before a target device needs to send data on a channel, if the target device does not find that another device sends data on the channel, the target device starts to send the data; or if the target device finds that another device is sending data, the target device backs off for a random period of time and then retries this process.

Clear channel assessment includes packet detection and energy detection. Packet detection is to detect whether a data packet is transmitted on a channel (for example, whether the data packet is transmitted is determined by detecting whether a packet header exists). If there is a data packet on the channel and energy exceeds a packet detection threshold, the channel is considered busy. Energy detection is to detect energy on a channel. If energy on a channel is greater than or equal to an energy detection threshold, the channel is considered busy. Only when both results of packet detection and energy detection indicate that the channel is idle, the channel is considered to be in an idle state. In other words, if no packet header is detected in a period of time, and energy on a channel is less than the energy detection threshold during energy detection, the channel is considered to be in an idle state.

(2) The virtual carrier sense mechanism learns a channel status through control information, instead of actually detecting a physical channel. Specifically, virtual carrier sense implements logical prediction based on related information carried in a media access control (media access control, MAC) frame. In other words, each frame carries duration (duration) information of a next frame of a transmit station, and each station related to the transmit station predicts channel occupancy based on the duration information. If a station does not monitor the duration information, for example, when a carrier is sensed, a duration field of the frame has been transmitted, the station may only rely on physical layer detection.

Virtual carrier sense may be implemented by using a network allocation vector (network allocation vector, NAV). The NAV is essentially a countdown timer, and gradually decreases with time passing. When a countdown is 0, a medium is considered to be in an idle state. Therefore, a timing value of the NAV is set and updated by using a virtual carrier sense technology with an appropriate value at an appropriate time. Specifically, after a station receives a frame, if a receiving address of the frame is not the station, the station may update the NAV based on a duration field in the received frame. If the receiving address of the frame is the station, it indicates that the station is a receive station. In this case, the station cannot update the NAV.

Optionally, before the NAV is updated, it may be further determined whether a value of the duration field in the current frame is greater than a current NAV value of the station. If the value is greater than the current NAV value, the NAV is updated. On the contrary, if the value is less than or equal to the current NAV value, the NAV is not updated. The NAV value starts from a start moment of the received frame, or the NAV value starts from a start moment of a sent frame.

### 3. Clear to send (clear to send, CTS) frame:

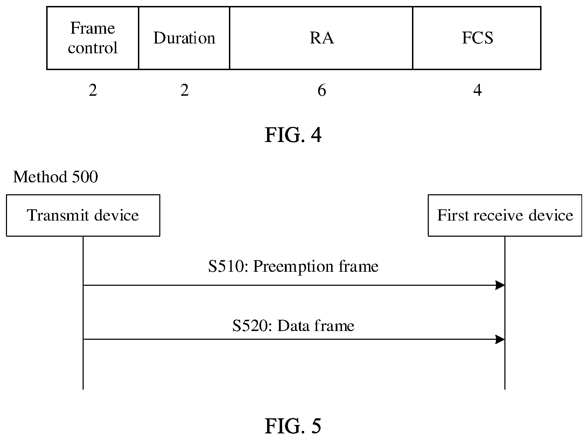

FIG. 4 is a diagram of a frame format of the CTS frame. A 2-byte frame control (frame control) field describes the format of the frame, including a protocol version, a frame type, and necessary control information (for example, whether the frame is segmented, is encrypted, needs to perform power control), a 2-byte duration field identifies a time of occupying a channel, a 6-byte receiving address (receiving address, RA) field indicates a destination address of the CTS frame, and a 4-byte frame check sequence (frame check sequence, FCS) field is used for check.

The following describes the data transmission method provided in embodiments of this application with reference to the accompanying drawings.

It should be understood that, for ease of understanding and description, the following describes in detail the method provided in embodiments of this application by using interaction between a transmit device and a receive device as an example. However, this should constitute no limitation on an execution body of the method provided in this application. For example, the transmit device shown in the following embodiments may be replaced with a component (like a chip or a chip system) configured in the transmit device; and the receive device shown in the following embodiments may be replaced with a component (like a chip or a chip system) configured in the receive device.

A specific structure of an execution body of the method provided in embodiments of this application is not specifically limited in the following embodiments, provided that communication can be performed according to the method provided in embodiments of this application by running a program that records code of the method provided in embodiments of this application.

As an example instead of a limitation, the transmit device may be an AP or a STA. Similarly, the receive device may also be an AP or a STA.

FIG. 5 is a schematic flowchart of a data transmission method 500 according to an embodiment of this application. The method 500 may include the following steps.

S510: A transmit device sends a preemption frame.

Correspondingly, a first receive device receives the preemption frame.

The preemption frame is used to preempt a channel for the transmit device. For example, when the channel is idle, the preemption frame is used to preempt the channel for the transmit device, to ensure that another device does not preempt the channel before the transmit device sends a data frame. For another example, when the channel is idle, the preemption frame is used to preempt the channel for the transmit device, to prevent another device from occupying the channel for a long time. For another example, when the channel is busy, the preemption frame is used to collide with a data frame or a management frame sent by another device, so that the transmit device successfully preempts the channel before the another device performs retransmission.

In some possible implementations, the preemption frame may be a management frame that does not require a positive acknowledgment (acknowledgement, ACK) response. In this implementation, after the transmit device sends the preemption frame to the first receive device, the first receive device may not need to reply to the transmit device with an ACK frame for the preemption frame. Optionally, a sending time period of the preemption frame is less than a preset threshold. For example, the preemption frame is a CTS frame.

The preemption frame includes first indication information used to determine first duration. The first duration is a reserve channel time period of the preemption frame, that is, a time period for which the preemption frame indicates a device (for example, a second receive device) other than the first receive device in coverage of the transmit device to keep silent. That the device other than the first receive device in the coverage of the transmit device keeps silent in the first duration may be understood as that the device other than the first receive device in the coverage of the transmit device does not occupy a channel in the first duration.

The first duration is not less than a sum of the sending time period of the preemption frame and a first time period, and a start moment of the first duration is a start moment at which the transmit device sends the preemption frame. The sending time period of the preemption frame is a time period of a space between the start moment at which the transmit device sends the preemption frame on the local device and an end moment at which the transmit device sends the preemption frame. Alternatively, the sending time period of the preemption frame is a time period of a space between a start moment at which the first receive device receives the preemption frame on the local device and an end moment at which the first receive device receives the preemption frame.

In a possible implementation, the first indication information indicates the first duration. Correspondingly, after receiving the preemption frame, the device other than the first receive device in the coverage of the transmit device may directly determine the first duration based on the first indication information included in the preemption frame. In this implementation, the first time period may be any time period. For example, the first time period is an SIFS, or the first time period is a PIFS, or the first time period is a DIFS or another preset time period.

In another possible implementation, the first indication information indicates the sending time period of the preemption frame. Correspondingly, after receiving the preemption frame, the device other than the first receive device in the coverage of the transmit device may determine the sending time period of the preemption frame based on the first indication information included in the preemption frame, and further determine the first duration based on the sum of the sending time period of the preemption frame and the first time period. The first time period may be pre-configured in the device other than the first receive device in the coverage of the transmit device. The first time period may be predefined in a protocol or a standard. For example, the first time period is an SIFS, or the first time period is a PIFS, or the first time period is a DIFS or another preset time period.

Optionally, if the sending time period of the preemption frame is extremely short, the first duration may be determined without considering the sending time period during actual implementation. In other words, the first duration is the first time period.

As shown in FIG. 4, when the preemption frame is a CTS frame, the first indication information may be carried in a duration field included in the CTS frame. Correspondingly, after receiving the CTS frame, the device other than the first receive device in the coverage of the transmit device determines the first duration based on the duration field included in the CTS frame, and updates an NAV based on the first duration. It may be understood that an RA field included in the CTS frame includes a destination address of the CTS frame, and the destination address of the CTS frame includes an address of the first receive device. After receiving the CTS frame, the device other than the first receive device in the coverage of the transmit device obtains the destination address of the CTS frame from the RA field included in the CTS frame, and updates the NAV based on the first duration when the destination address of the CTS frame is different from an address of the device.

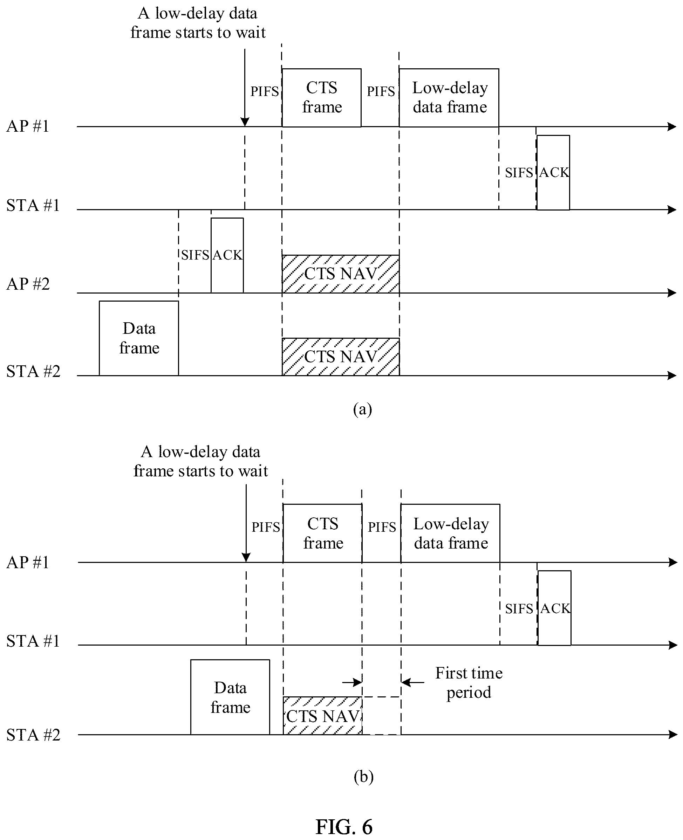

As shown in (a) in FIG. 6, after an AP #1 (an example of the transmit device) sends a CTS frame (an example of the preemption frame), if an AP #2 receives the CTS frame, the AP #2 determines, based on an RA field included in the CTS frame, that a destination address of the CTS frame is different from an address of the AP #2, and then the AP #2 updates an NAV (denoted as a CTS NAV) based on a duration field included in the CTS frame. The duration field indicates the first duration. Therefore, before the CTS NAV is 0, a STA #2 may not preempt a channel. Similarly, after receiving the CTS frame, the STA #2 updates an NAV (denoted as a CTS NAV) based on the duration field included in the CTS frame. Therefore, before the CTS NAV is 0, the STA #2 may not preempt the channel.

As shown in (b) in FIG. 6, after the AP #1 sends a CTS frame, if the STA #2 receives the CTS frame, the STA #2 determines, based on an RA field included in the CTS frame, that a destination address of the CTS frame is different from an address of the STA #2, and then the STA #2 updates an NAV (denoted as a CTS NAV) based on a duration field included in the CTS frame. The duration field indicates a sending time period of the CTS frame. Therefore, before the CTS NAV is 0, the STA #2 may not preempt a channel. In addition, after the CTS NAV is 0, the STA #2 may not preempt the channel in the first time period, that is, the STA #2 determines, based on the CTS frame, that a time period for keeping silent is a sum of the sending time period of the CTS frame and the first time period. Alternatively, the STA #2 updates the NAV based on the first time period and the duration field included in the CTS frame, that is, the STA #2 determines the sending time period of the CTS frame based on the duration field, and determines the first duration based on the sum of the sending time period of the CTS frame and the first time period, and then the STA #2 updates the NAV based on the first duration.

The following describes a manner of sending the preemption frame by the transmit device. It should be understood that the following manner of sending the preemption frame is merely an example, and does not constitute a unique limitation on an implementation of sending the preemption frame by the transmit device in embodiments of this application.

In a possible implementation, after a to-be-sent data frame starts to wait on the transmit device, the transmit device may continuously monitor the channel, and after detecting that the channel is idle, the transmit device sends the preemption frame after the PIFS.

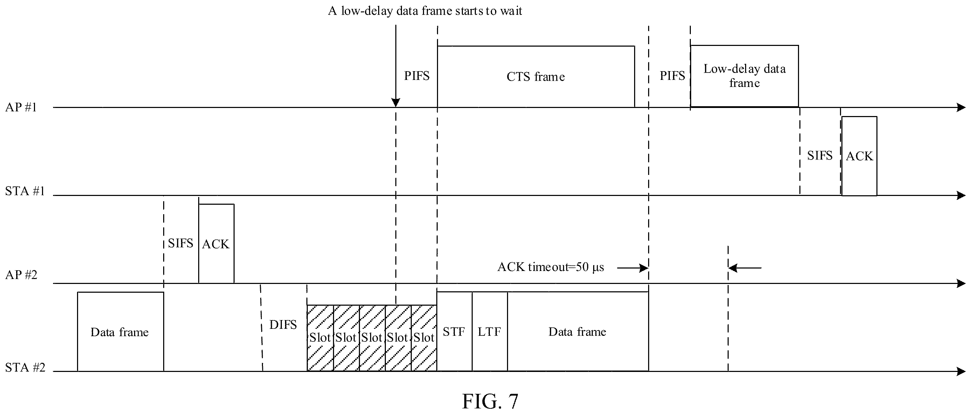

As shown in (a) in FIG. 6 and FIG. 7, at a moment at which a low-delay data frame (an example of the to-be-sent data frame) starts to wait on the AP #1 (an example of the transmit device), because no other device (for example, the AP #2 and the STA #2) sends a data frame or a management frame, the AP #1 detects that the channel is idle. Further, starting from a moment at which the AP #1 detects that the channel is idle, the AP #1 sends the CTS frame (an example of the preemption frame) after the PIFS.

It should be noted that, in this implementation, in a period of time between the moment at which the transmit device detects that the channel is idle and the start moment at which the transmit device sends the preemption frame, the channel may be idle or may be busy. This is not limited in embodiments of this application.

In another possible implementation, after a to-be-sent data frame starts to wait on the transmit device, the transmit device may not monitor whether the channel is idle, and the transmit device sends the preemption frame when a waiting time period of the to-be-sent data frame on the transmit device reaches the PIFS.

In some cases, that the to-be-sent data frame starts to wait on the transmit device may be understood as that the to-be-sent data frame enters a waiting queue of the transmit device. The to-be-sent data frame may be generated by the transmit device, or may be a data frame received by the transmit device from another device. A channel used by the transmit device to receive a data frame may be the same as or different from the channel used to send the to-be-sent data frame. For ease of description, the following describes embodiments of this application by using an example in which the to-be-sent data frame is a low-delay data frame. It should be understood that the to-be-sent data frame may also be another type of data frame. A type of the to-be-sent data frame is not limited in embodiments of this application.

Optionally, at a moment at which the low-delay data frame starts to wait on the transmit device, if the transmit device does not send another data frame, or the transmit device does not receive a data frame from another device, the transmit device sends the preemption frame when a waiting time period of the low-delay data frame on the transmit device reaches the PIFS. At the moment at which the low-delay data frame starts to wait on the transmit device, if the transmit device is sending another data frame, after the transmit device sends the data frame, the transmit device sends the preemption frame after the PIFS. If the data frame sent by the transmit device is a data frame that needs to be acknowledged, after receiving an acknowledgment frame for the data frame, the transmit device sends the preemption frame after the PIFS. Alternatively, at the moment at which the low-delay data frame starts to wait on the transmit device, if the transmit device is receiving a data frame from another device, after the transmit device receives the data frame, the transmit device sends the preemption frame after the PIFS. If the data frame received by the transmit device is a data frame that needs to be acknowledged, after sending an acknowledgment frame for the data frame, the transmit device sends the preemption frame after the PIFS.

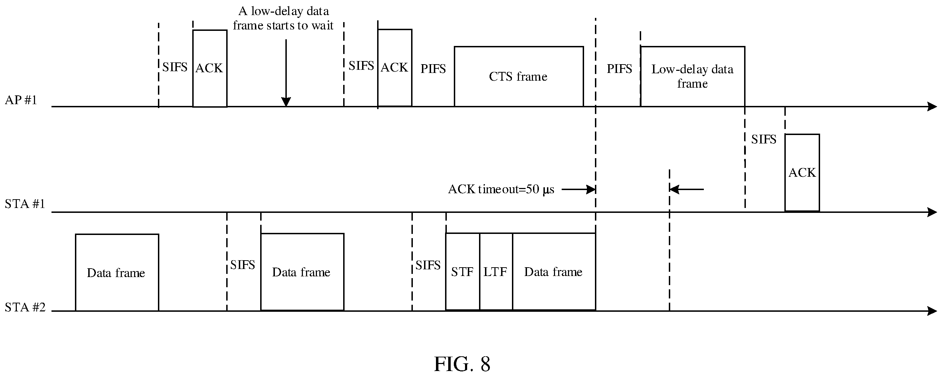

As shown in FIG. 8, at a moment at which the low-delay data frame starts to wait on the AP #1 (an example of the transmit device), the AP #1 is receiving a data frame from the STA #2. In this case, after the AP #1 receives the data frame and sends an ACK frame to the STA #2, the AP #1 sends the CTS frame (an example of the preemption frame) after the PIFS.

In another possible implementation, if a waiting time period of a low-delay data frame on the transmit device reaches N preset time periods, and a time period for which the channel is continuously idle in each of the N preset time periods is less than the preset time period, the transmit device sends the preemption frame.

The preset time period may be any one of the PIFS, the DIFS, the SIFS, or another preset time period.

In this implementation, after the low-delay data frame starts to wait on the transmit device, the transmit device continuously monitors the channel, and the time period for which the channel is continuously idle in each of the N preset time periods is less than the preset time period. In this case, the transmit device sends the preemption frame. In other words, when the transmit device preempts the channel based on the preset time period, if the transmit device fails to preempt the channel N consecutive times, the transmit device sends the preemption frame. That the transmit device preempts the channel based on the preset time period means that if the transmit device detects that the time period for which the channel is continuously idle reaches the preset time period, it indicates that the transmit device successfully preempts the channel; or if the transmit device detects that the time period for which the channel is continuously idle is less than the preset time period, it indicates that the transmit device fails to preempt the channel.

Optionally, at a moment at which the low-delay data frame starts to wait on the transmit device, if the transmit device does not send another data frame, or the transmit device does not receive a data frame from another device, the transmit device continuously monitors the channel after the low-delay data frame starts to wait on the transmit device. At the moment at which the low-delay data frame starts to wait on the transmit device, if the transmit device is sending another data frame, the transmit device continuously monitors the channel after sending the data frame. If the data frame sent by the transmit device is a data frame that needs to be acknowledged, after receiving an acknowledgment frame for the data frame, the transmit device continuously monitors the channel. Alternatively, at a moment at which the low-delay data frame starts to wait on the transmit device, if the transmit device is receiving a data frame from another device, the transmit device continuously monitors the channel after receiving the data frame. If the data frame received by the transmit device is a data frame that needs to be acknowledged, after sending an acknowledgment frame for the data frame, the transmit device continuously monitors the channel. Further, if the transmit device determines that the time period for which the channel is continuously idle in each of the N preset time periods is less than the preset time period, the transmit device sends the preemption frame.

In another possible implementation, the transmit device may alternatively send the preemption frame based on another determining condition.

S520: The transmit device sends the data frame.

Correspondingly, the first receive device receives the data frame.

Optionally, after the transmit device sends the preemption frame, if the time period for which the channel is continuously idle reaches the preset time period, the transmit device sends the data frame. In other words, after the transmit device sends the preemption frame, the transmit device continuously monitors the channel, and if the transmit device detects that the time period for which the channel is continuously idle reaches the preset time period, the transmit device sends the data frame. For ease of description, the following describes embodiments of this application by using an example in which the to-be-sent data frame is a low-delay data frame.

In a process in which the transmit device sends the preemption frame, there may be the following two cases.

### Case 1:

In the process in which the transmit device sends the preemption frame, the channel keeps idle, that is, the preemption frame sent by the transmit device does not collide with a data frame or a management frame sent by another device. In this case, because the preemption frame includes the first indication information, the device other than the first receive device in the coverage of the transmit device may start to preempt the channel only after the device is silent for at least the first duration. When the device other than the first receive device in the coverage of the transmit device keeps silent, after the transmit device sends the preemption frame, the transmit device can successfully preempt the channel before the another device, and sends the low-delay data frame in time.

For example, if the first duration is not less than the sum of the sending time period of the preemption frame and the first time period, the another device keeps silent in the process in which the transmit device sends the preemption frame, and keeps silent in the first time period after the transmit device sends the preemption frame. After the another device ends silence and the another device detects that the time period for which the channel is continuously idle reaches at least the preset time period, the another device successfully preempts the channel. In other words, after the transmit device sends the preemption frame, the time period for which the channel keeps idle is not less than a sum of the first time period and the preset time period. After the transmit device sends the preemption frame, the time period for which the channel keeps idle is not less than sum of thefirst time period and the preset time period. Therefore, after sending the preemption frame, the transmit device may detect that the channel keeps idle in the preset time period, so that the transmit device can send the low-delay data frame in time.

As shown in (a) in FIG. 6, after the AP #1 sends the CTS frame, because the STA #2 and the AP #2 update the NAV based on the CTS frame, the STA #2 and the AP #2 do not occupy the channel in a process of sending the CTS frame by the AP #1 and in the PIFS (an example of the first time period) after an end moment at which the AP #1 sends the CTS frame. Further, after sending the CTS frame, the AP #1 may successfully preempt the channel after a time period of the PIFS (an example of the preset time period), to send the low-delay data frame in time.

Case 2: In the process in which the transmit end sends the preemption frame, the channel is busy, that is, the preemption frame sent by the transmit device collides with a data frame sent by another device. In this case, because the preemption frame sent by the transmit device collides with the data frame sent by the another device, the another device fails to send the data frame. Then, the another device retransmits the data frame that fails to be sent. According to the protocol standard, if a device fails to send a data frame, the device performs retransmission only after waiting for a specified timeout time period (for example, 50 µs). In conclusion, if the preemption frame sent by the transmit device collides with the data frame sent by the another device, the another device fails to send the data frame, and the channel keeps idle in 50 µs after the another device sends the data frame. However, a preset time period (for example, the PIFS) required for preempting the channel by the transmit device may be less than 50 µs. Therefore, the transmit device may successfully preempt the channel before the another device performs retransmission, to send the low-delay data frame in time.

As shown in FIG. 7, after a waiting time period of the low-delay data frame on the AP #1 reaches the PIFS (an example of a preset time period), the AP #1 starts to send the CTS frame. After the STA #2 sends the data frame and receives an ACK frame from the AP #2, the STA #2 still has a to-be-sent data frame including a short training field (short training field, STF) and a long training field (long training field, LTF). In this case, the STA #2 continues to preempt the channel. If the STA #2 detects that the time period for which the channel is idle reaches the DIFS, and after the STA #2 backs off five slots, the STA #2 successfully preempts the channel. It can be learned from FIG. 7 that a start moment at which the AP #1 sends the CTS frame is the same as a moment at which the STA #2 successfully preempts the channel, and in this case, the AP #1 and the STA #2 occupy the channel simultaneously. Therefore, the CTS frame sent by the AP #1 collides with the data frame sent by the STA #2, and consequently, the STA #2 fails to send the data frame. Further, because a timeout time period for the STA #2 to wait for the AP #2 to reply with the ACK frame is 50 µs, the channel keeps idle in 50 µs after the STA#2 sends the data frame. In this way, the AP #1 may successfully preempt the channel based on the PIFS, and send the low-delay data frame.

As shown in FIG. 8, at the moment at which the low-delay data frame starts to wait on the AP #1, the AP #1 is receiving the data frame from the STA #2. In this case, after receiving the data frame from the STA #2, and sending the ACK frame for the data frame, the AP #1 sends the CTS frame after the PIFS (an example of a preset time period). Correspondingly, after receiving the ACK frame from the AP #1, the STA #2 continues to send, after the SIFS, the data frame including the STF and the LTF. At a moment at which the AP #1 starts to send the CTS frame, the STA #2 has not completed sending of the data frame including the STF and the LTF. Therefore, the CTS frame sent by the AP #1 collides with the data frame sent by the STA#2, and consequently, the STA #2 fails to send the data frame. Further, in a process in which the STA #2 waits for the AP #1 to reply with the ACK frame, the AP #1 may successfully preempt the channel based on the PIFS, and send the low-delay data frame.

As described above, before sending the to-be-sent data frame, the transmit device first sends the preemption frame. The preemption frame includes the first indication information used to determine the first duration, so that the device other than the first receive device in the coverage of the transmit device may keep silent in the first duration, to help the transmit device send the to-be-sent data frame in time, so as to reduce a data transmission delay. Alternatively, the preemption frame sent by the transmit device collides with the data frame sent by the another device, so that the transmit device can successfully preempt the channel before the another device performs retransmission, and send the to-be-sent data frame in time, to reduce data transmission.

The foregoing solution resolves a problem of how the transmit device sends the data frame in time. However, after the receive device receives the data frame from the transmit device, if the receive device needs to send a response frame for the data frame to the transmit device, a problem of how the receive device sends the response frame in time needs to be resolved.

The following describes a solution used to resolve the problem of how the receive device sends the response frame in time.

Optionally, the low-delay data frame sent by the transmit device includes second indication information used to determine second duration, and the second duration is a reserve channel time period of the low-delay data frame, that is, a time period for which the low-delay data frame indicates a device other than the first receive device in the coverage of the transmit device to keep silent. That the device other than the first receive device in the coverage of the transmit device keeps silent in the second duration may be understood as that the device other than the first receive device in the coverage of the transmit device does not occupy the channel in the second duration.

The second duration is not less than a sum of a sending time period of the low-delay data frame and a second time period. Optionally, the second time period is not less than a time period of a space between a first moment and a second moment. The first moment is an end moment at which the transmit device sends the low-delay data frame on the local device, and the second moment is a start moment at which the transmit device receives the response frame on the local device. Alternatively, the first moment is an end moment at which the first receive device receives the low-delay data frame on the local device. The second moment is a start moment at which the first receive device sends the response frame on the local device, and the response frame responds to the low-delay data frame. The sending time period of the low-delay data frame is a time period of a space between a start moment at which the transmit device sends the low-delay data frame and the end moment at which the transmit device sends the low-delay data frame. Alternatively, the sending time period of the low-delay data frame is a time period of a space between a start moment at which the first receive device receives the low-delay data frame and the end moment at which the first receive device receives the low-delay data.

In conclusion, the second duration is not less than a time period of a space between the start moment at which the transmit device sends the low-delay data frame on the local device and the start moment at which the transmit device receives the response frame on the local device.

Optionally, the second moment is an end moment at which the transmit device receives the response frame on the local device. Alternatively, the second moment is an end moment at which the first receive device sends the response frame on the local device. Correspondingly, the second duration is not less than a time period of a space between the start moment at which the transmit device sends the low-delay data frame on the local device and the end moment at which the transmit device receives the response frame on the local device.

In a possible implementation, the second indication information indicates the second duration. Correspondingly, after receiving the low-delay data frame, the device other than the first receive device in the coverage of the transmit device may directly determine the second duration based on the second indication information included in the low-delay data frame.

In another possible implementation, the second indication information indicates the sending time period of the low-delay data frame. Correspondingly, after receiving the low-delay data frame, the device other than the first receive device in the coverage of the transmit device may determine the sending time period of the low-delay data frame based on the second indication information included in the low-delay data frame, and further determine the second duration based on the sum of the sending time period of the low-delay data frame and the second time period. The second time period may be predefined in a protocol or a standard. The second time period may be pre-configured in the device other than the first receive device in the coverage of the transmit device.

It may be understood that, based on the second indication information included in the low-delay data frame, the device other than the first receive device in the coverage of the transmit device may start to preempt the channel only after the device is silent for at least the second duration. Therefore, after sending the low-delay data frame, the transmit device may send the response frame without contention, to implement low-delay interaction between the transmit device and the receive device.

For example, the response frame is an acknowledgment frame for the low-delay data frame. For example, if a space between the acknowledgment frame and the low-delay data frame is the SIFS, the second time period is not less than the SIFS, or is not less than a sum of the SIFS and a sending time period of the acknowledgment frame.

For example, the response frame is a data frame sent by the receive device to the transmit device in response to the low-delay data frame. For example, after receiving the low-delay data frame from the transmit device, the receive device first sends the acknowledgment frame for the low-delay data frame to the transmit device, and then sends the response frame to the transmit device. If the space between the acknowledgment frame and the low-delay data frame is the SIFS, and a space between the response frame and the acknowledgment frame is the PIFS, the second time period is not less than a sum of the SIFS, the sending time period of the acknowledgment frame, and the PIFS, or the second time period is not less than a sum of the SIFS, the sending time period of the acknowledgment frame, the PIFS, and a sending time period of the response frame. For another example, after receiving the low-delay data frame from the transmit device, the receive device sends the data frame to the transmit device in response to the low-delay data frame after the PIFS, and in this case, the second time period is not less than the PIFS, or is not less than a sum of the PIFS and the sending time period of the response frame.

Optionally, the second time period is not less than a time period of a space between the first moment and a third moment, and the third moment is a start moment at which the transmit device sends an acknowledgment frame for the response frame, or the third moment is an end moment at which the transmit device sends an acknowledgment frame for the response frame.

In conclusion, the second duration is not less than a time period of a space between the start moment at which the transmit device sends the low-delay data frame on the local device and the end moment at which the transmit device sends the acknowledgment frame for the response frame on the local device. Alternatively, the second duration is not less than a time period of a space between the start moment at which the transmit device sends the low-delay data frame on the local device and the end moment at which the transmit device sends the acknowledgment frame for the response frame on the local device.

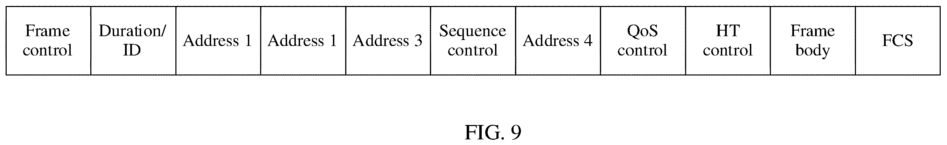

For example, the second indication information is carried in a duration field included in the low-delay data frame. FIG. 9 is a diagram of a frame format of a low-delay data frame. As shown in FIG. 9, the low-delay data frame may include the following fields: a frame control field, duration and identifier (identifier, ID), an address 1 (address 1), an address 2 (address 2), an address 3 (address 3), sequence control (sequence control), an address 4 (address 4), QoS control (QoS control), high throughput (high throughput, HT) control (HT control), a frame body (frame body), and an FCS. The frame control field describes a format of a frame and includes a protocol version, a frame type, and the like. The duration and identifier field indicates a time for which the channel is to be occupied. The address 1 is a destination address of the low-delay data frame. The address 2 is a basic service set identifier (basic service set identifier, BSSID) of the transmit device. The address 3 is a source address (source address, SA) of the low-delay data frame. The address 4 is a reserved field. The QoS control field indicates a QoS parameter. The sequence control field is used to reassemble frame fragments and discard duplicate frames. The HT control field indicates high throughput capability information. The frame body field is a data field. The FCS field is used to check frame integrity.

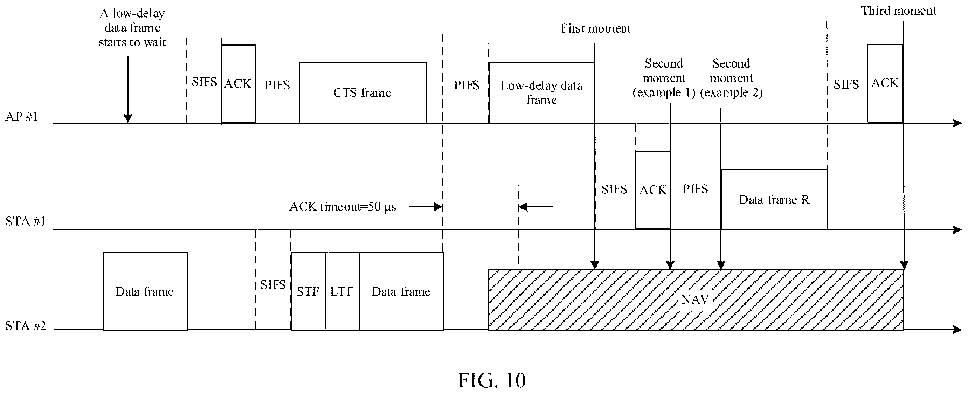

As shown in FIG. 10, after the AP #1 (an example of the transmit device) sends the low-delay data frame, if the STA #2 receives the low-delay data frame, the STA #2 determines, based on the address 1 field included in the low-delay data frame, that the destination address of the low-delay data frame is different from the address of the STA #2, and then the STA #2 updates the NAV based on the duration field included in the low-delay data frame, where the duration field indicates the second duration. Further, before the NAV is to be 0, the STA #2 may not preempt the channel.

For example, as shown in FIG. 10, if the response frame is the ACK frame for the low-delay data frame, the second time period is the time period of the space between the second moment (an example 1) and the first moment, that is, the second time period is the sum of the SIFS and the sending time period of the ACK frame for the low-delay data frame. Further, before the STA#1 sends the ACK frame for the low-delay data frame, the STA #2 may not occupy the channel.

If the response frame is a data frame R sent by the STA #1 to the AP #1 in response to the low-delay data frame, the second time period is the time period of the space between the second moment (an example 2) and the first moment, that is, the second time period is the sum of the SIFS, the sending time period of the ACK frame for the low-delay data frame, and the PIFS. Further, before the STA #1 sends the data frame R, the STA #2 may not occupy the channel.

Optionally, as shown in FIG. 10, the second time period is the time period of the space between the third moment and the first time period, that is, the second time period is a sum of the SIFS, the sending time period of the ACK frame for the low-delay data frame, the PIFS, a sending time period of the data frame R, the SIFS, and a sending time period of an ACK frame for the data frame R. Further, before the AP #1 sends the ACK frame for the data frame R, the STA #2 may not occupy the channel.

The solution used to resolve the problem of how the transmit device sends the data frame in time and the solution used to resolve the problem of how the receive device sends the response frame in time may be independent of each other, or may be used together. For example, before sending the to-be-sent data frame, the transmit device first sends the preemption frame. The preemption frame includes the first indication information, and the data frame sent by the transmit device does not include the second indication information. For another example, before sending the to-be-sent data frame, the transmit device may not send the preemption frame, but preempts the channel in an existing manner. To be specific, if it is detected that the time period for which the channel keeps idle reaches the preset time period (for example, the PIFS), the transmit device sends the data frame, where the data frame includes the second indication information. For another example, before sending the to-be-sent data frame, the transmit device first sends the preemption frame. The preemption frame includes the first indication information. On this basis, the data frame sent by the transmit device includes the second indication information.

In this embodiment of this application, before the transmit device needs to send the to-be-sent data frame, the transmit device first sends the preemption frame, and the preemption frame includes the first indication information used to determine the first duration. After the transmit device sends the preemption frame, if the time period for which the channel keeps idle reaches the preset time period (for example, the PIFS), the transmit device sends the to-be-sent data frame, to ensure timely sending of the data frame, so as to reduce the data transmission delay. For example, in the process in which the transmit device sends the preemption frame, if the channel is idle, another device may not occupy the channel in the first duration based on the first indication information in the preemption frame, to ensure that the transmit device sends the low-delay data frame in time after sending the preemption frame. For another example, in the process in which the transmit device sends the preemption frame, if the channel is busy, the preemption frame may interrupt a data frame that is being sent by another device, so that in a process in which the another device waits for retransmission, the transmit device can successfully preempt the channel, to send the to-be-sent data frame in time.

In addition, if the data frame sent by the transmit device includes the second indication information, the another device may keep silent in the second duration, to ensure that the first receive device can send the response frame to the transmit device in time, so as to implement low-delay interaction between the transmit device and the first receive device.

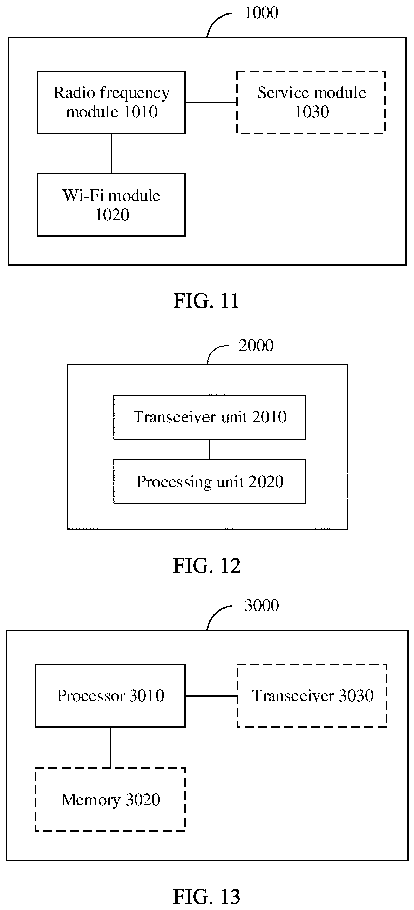

The method in embodiments of this application is described above in detail with reference to FIG. 5 to FIG. 10. An apparatus in embodiments of this application is described below in detail with reference to FIG. 11 to FIG. 14. It should be noted that the apparatus shown in FIG. 11 to FIG. 14 may implement steps in the foregoing method. For brevity, details are not described herein.

FIG. 11 is a diagram of a communication apparatus 1000 according to an embodiment of this application. As shown in FIG. 11, the communication apparatus 1000 includes a radio frequency module 1010 and a Wi-Fi module 1020.

The radio frequency module 1010 is configured to send a preemption frame, where the preemption frame includes first indication information used to determine first duration, and the first duration is a time period for which a device other than a first receive device keeps silent after receiving the preemption frame.

After the preemption frame is sent, the Wi-Fi module 1020 is configured to detect that a time period for which a channel is continuously idle reaches a preset time period.

The radio frequency module 1010 is further configured to send a data frame.

Optionally, in an embodiment, the radio frequency module 1010 is specifically configured to send the preemption frame if a waiting time period of the data frame on a transmit device reaches a preset time period.

Optionally, in an embodiment, the radio frequency module 1010 is specifically configured to send the preemption frame if a waiting time period of the data frame on a transmit device reaches N preset time periods, and a time period for which a channel is continuously idle in each of the N preset time periods is less than the preset time period, where N is a positive integer.

Optionally, the Wi-Fi module 1020 is specifically configured to: monitor the channel, and determine that the waiting time period of the data frame on the transmit device reaches the N preset time periods, and that the time period for which the channel is continuously idle in each of the N preset time periods is less than the preset time period.

Optionally, the communication apparatus 1000 further includes a service module 1030, and the service module 1030 is configured to identify a type of the data frame. For example, the service module 1030 is configured to identify whether the data frame is a low-delay data frame. If the data frame is a low-delay data frame, the service module 1030 is further configured to send the low-delay data frame to a low-delay queue of the Wi-Fi module 1020.

FIG. 12 is a block diagram of a communication apparatus 2000 according to an embodiment of this application. The apparatus 2000 includes a transceiver unit 2010 and a processing unit 2020. The transceiver unit 2010 may be configured to implement a corresponding communication function. The transceiver unit 2010 may also be referred to as a communication interface or a communication unit. The transceiver unit 2010 may correspond to the radio frequency module 1010 in FIG. 11.

The processing unit 2020 may be configured to perform data processing. The processing unit 2020 may correspond to the Wi-Fi module 1020 and the service module 1030 in FIG. 11. Optionally, the processing unit 2020 may also be referred to as a monitoring unit, or the processing unit 2020 has a function of detecting whether a channel is idle.

Optionally, the apparatus 2000 further includes a storage unit. The storage unit may be configured to store instructions and/or data. The processing unit 2020 may read the instructions and/or the data in the storage unit, so that the apparatus implements actions of the device in the foregoing method embodiments.

In a design, the apparatus 2000 may be the transmit device in the foregoing embodiments, or may be a component (for example, a chip) of the transmit device. The apparatus 2000 may implement steps or procedures performed by the transmit device in the foregoing method embodiments. The transceiver unit 2010 may be configured to perform a sending/receiving-related operation performed by the transmit device in the foregoing method embodiments. The processing unit 2020 may be configured to perform a processing-related operation performed by the transmit device in the foregoing method embodiments.

In a possible implementation, the transceiver unit 2010 is configured to send a preemption frame, where the preemption frame includes first indication information used to determine first duration, and the first duration is a time period for which a device other than a first receive device keeps silent after receiving the preemption frame; after the preemption frame is sent, the processing unit 2020 is configured to detect that a time period for which a channel is continuously idle reaches a preset time period; and the transceiver unit 2010 is further configured to send a data frame.

The apparatus 2000 may implement steps or procedures performed by the transmit device in the method embodiments according to embodiments of this application. The apparatus 2000 may include units configured to perform the methods performed by the transmit device in embodiments shown in FIG. 5. For more detailed descriptions of the apparatus 2000, refer to related descriptions in the foregoing method embodiments. Details are not described herein again.

In another design, the apparatus 2000 may be the first receive device in the foregoing embodiments, or may be a component (for example, a chip) of the first receive device. The apparatus 2000 may implement steps or procedures performed by the first receive device in the foregoing method embodiments. The transceiver unit 2010 may be configured to perform a sending/receiving-related operation performed by the first receive device in the foregoing method embodiments. The processing unit 2020 may be configured to perform a processing-related operation performed by the first receive device in the foregoing method embodiments.

In a possible implementation, the transceiver unit 2010 is configured to receive a preemption frame, where the preemption frame includes first indication information used to determine first duration, and the first duration is a time period for which a device other than the first receive device keeps silent after receiving the preemption frame; and after the preemption frame is received, the transceiver unit 2010 is further configured to receive a data frame.

The apparatus 2000 may implement steps or procedures performed by the first receive device in the method embodiments according to embodiments of this application. The apparatus 2000 may include units configured to perform the methods performed by the first receive device in embodiments shown in FIG. 5. For more detailed descriptions of the apparatus 2000, refer to related descriptions in the foregoing method embodiments. Details are not described herein again.

It should be understood that specific processes of performing the foregoing corresponding steps by the units are described in detail in the foregoing method embodiments. For brevity, details are not described herein again.

It should be further understood that the apparatus 2000 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the apparatus 2000 may be specifically the transmit device or the receive device in the foregoing embodiments, and may be configured to perform procedures and/or steps corresponding to the device in the foregoing method embodiments. To avoid repetition, details are not described herein again.

The apparatus 2000 in the foregoing solutions has a function of implementing corresponding steps performed by the transmit device or the receive device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform a receiving/sending operation and a related processing operation in the method embodiments.

In addition, the transceiver unit 2010 may alternatively be a transceiver circuit (for example, may include a receiving circuit and a sending circuit), and the processing unit may be a processing circuit.

It should be noted that the apparatus in FIG. 12 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 13 is a block diagram of a communication apparatus 3000 according to an embodiment of this application. The apparatus 3000 includes a processor 3010, and the processor 3010 is coupled to a memory 3020. Optionally, the apparatus further includes the memory 3020, configured to store a computer program or instructions and/or data. The processor 3010 is configured to: execute the computer program or the instructions stored in the memory 3020, or read the data stored in the memory 3020, to perform the methods in the foregoing method embodiments.

Optionally, there are one or more processors 3010.

Optionally, there are one or more memories 3020.

Optionally, the memory 3020 and the processor 3010 are integrated together, or disposed separately.

Optionally, as shown in FIG. 13, the apparatus 3000 further includes a transceiver 3030, and the transceiver 3030 is configured to receive and/or send a signal. For example, the processor 3010 is configured to control the transceiver 3030 to receive and/or send a signal.

In a solution, the apparatus 3000 is configured to implement operations performed by the device in the foregoing method embodiments. For example, the processor 3010 is configured to execute the computer program or instructions stored in the memory 3020, to implement related operations of the transmit device or the receive device in the foregoing method embodiments.

In an implementation process, steps in the foregoing methods can be implemented by using a hardware integrated logical circuit in the processor 3010, or by using instructions in a form of software. The method disclosed with reference to embodiments of this application may be directly performed by a hardware processor, or may be performed by a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory 3020, and the processor 3010 reads information in the memory 3020 and completes the steps in the foregoing methods in combination with hardware of the processor. To avoid repetition, details are not described herein again.

It should be understood that, in embodiments of this application, the processor may be one or more integrated circuits, and is configured to execute a related program, to perform the method embodiments of this application.

A processor (for example, the processor 3010) may include one or more processors and be implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gate logic, transistor logic, a discrete hardware circuit, a processing circuit, other appropriate hardware or firmware, and/or another appropriate combination of hardware and software, and is configured to perform various functions described in this disclosure. The processor may be a general-purpose processor or a special-purpose processor. For example, the processor 3010 may be a baseband processor or a central processing unit. The baseband processor may be configured to process a communication protocol and communication data. The central processing unit may be configured to enable the apparatus to execute a software program and process data in the software program. In addition, a part of the processor may further include a non-volatile random access memory. For example, the processor may further store information of a device type.

The program in this application represents software in a broad sense. A non-limitative example of the software includes program code, a program, a subprogram, instructions, an instruction set, code, a code segment, a software module, an application, a software application, or the like. The program may be run in a processor and/or a computer, to enable the apparatus to perform various functions and/or processes described in this application.

The memory (for example, the memory 3020) may store data required by the processor (for example, the processor 3010) during software execution. The memory may be implemented by using any suitable storage technology. For example, the memory may be any available storage medium that can be accessed by a processor and/or a computer. A non-limitative example of the storage media includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced 5 SDRAM, ESDRAM), a synchlink dynamic random access memory (synchlink DRAM, SLDRAM), a direct rambus random access memory (direct rambus RAM, DR RAM), a removable media, an optical disc storage, a magnetic disk storage media, a magnetic storage device, a flash memory, a register, a state storage, a remote mounted storage, a local or remote storage component, or any other medium capable of carrying or storing software, data, or information and accessible by a processor/computer. It should be noted that the memory described in this specification aims to include but is not limited to these memories and any memory of another appropriate type.

The memory (for example, the memory 3020) and the processor (for example, the processor 3010) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (for example, the integrated circuit may be disposed in a terminal device or another network node).

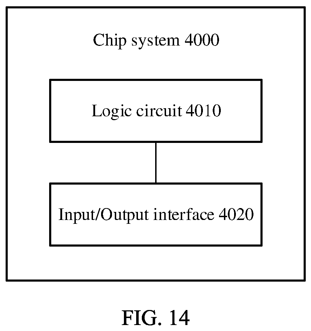

FIG. 14 is a block diagram of a chip system 4000 according to an embodiment of this application. The chip system 4000 (also referred to as a processing system) includes a logic circuit 4010 and an input/output interface (input/output interface) 4020.

The logic circuit 4010 may be a processing circuit in the chip system 4000. The logic circuit 4010 may be coupled and connected to a storage unit, and invoke instructions in the storage unit, so that the chip system 4000 can implement methods and functions in embodiments of this application. The input/output interface 4020 may be an input/output circuit in the chip system 4000, and output information processed by the chip system 4000, or input to-be-processed data or signaling information into the chip system 4000 for processing.

In a solution, the chip system 4000 is configured to implement operations performed by the device in the foregoing method embodiments. For example, the logic circuit 4010 is configured to implement processing-related operations performed by the transmit device or the receive device in the foregoing method embodiments, for example, processing-related operations performed by the transmit device or the receive device in the embodiment shown in FIG. 5; and the input/output interface 4020 is configured to implement sending and/or receiving-related operations performed by the transmit device or the receive device in the foregoing method embodiments, for example, sending and/or receiving-related operations performed by the transmit device or the receive device in the embodiment shown in FIG. 5.

An embodiment of this application further provides a computer-readable storage medium. The computer-readable storage medium stores computer instructions for implementing the method performed by the transmit device or the receive device in the foregoing method embodiments.

An embodiment of this application further provides a computer program product, including instructions. When the instructions are executed by a computer, the method performed by the transmit device or the receive device in the foregoing method embodiments is implemented.

An embodiment of this application further provides a communication system. The communication system includes the transmit device and the receive device in the foregoing method embodiments.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electrical form, a mechanical form, or another form.

The units described as separate parts may or may not be physically separate, and parts displayed as units may or may not be physical units, that is, may be located at one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement embodiments, all or a part of embodiments may be implemented in a form of computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
sending, by a transmit device, a preemption frame, wherein the preemption frame comprises first indication information used to determine first duration, and the first duration is a time period for which a device other than a first receive device keeps silent after receiving the preemption frame; and
after the preemption frame is sent, detecting, by the transmit device, that a time period for which a channel is continuously idle reaches a preset time period, and sending a data frame.

2. The method according to claim 1, wherein
the first duration is not less than a sum of a sending time period of the preemption frame and a first time period.

3. The method according to claim 2, wherein the first time period is any one of a point coordination function interframe space PIFS or another preset time period.

4. The method according to any one of claims 1 to 3, wherein the first indication information indicates the first duration.

5. The method according to any one of claims 1 to 3, wherein the first indication information indicates the sending time period of the preemption frame.

6. The method according to any one of claims 1 to 5, wherein the first indication information is carried in a duration field of the preemption frame.

7. The method according to any one of claims 1 to 6, wherein the preemption frame comprises a destination address, and the destination address comprises an address of the first receive device.

8. The method according to any one of claims 1 to 7, wherein the sending, by a transmit device, a preemption frame comprises:
sending, by the transmit device, the preemption frame if a waiting time period of the data frame on the transmit device reaches a preset time period.

9. The method according to any one of claims 1 to 7, wherein the sending, by a transmit device, a preemption frame comprises:
sending, by the transmit device, the preemption frame if a waiting time period of the data frame on the transmit device reaches N preset time periods, and a time period for which a channel is continuously idle in each of the N preset time periods is less than the preset time period, wherein N is a positive integer.

10. The method according to any one of claims 1 to 9, wherein the preset time period is any one of a PIFS or another preset time period.

11. The method according to any one of claims 1 to 10, wherein the data frame comprises second indication information used to determine second duration, and the second duration is a time period for which a device other than the first receive device keeps silent after receiving the data frame.

12. The method according to claim 11, wherein the second duration is not less than a time period of a space between a start moment at which the transmit device sends the data frame and a start moment at which the transmit device receives a response frame; or the second duration is not less than a time period of a space between the start moment at which the transmit device sends the data frame and an end moment at which the transmit device sends an acknowledgment frame, wherein the response frame responds to the data frame, and the acknowledgment frame is an acknowledgment frame for the response frame.

13. The method according to claim 11 or 12, wherein the second indication information is carried in a duration field of the data frame.

14. The method according to any one of claims 1 to 13, wherein the preemption frame is a management frame that does not require a positive acknowledgment ACK response.

15. A silent time period determining method, comprising:
receiving, by a second receive device, a preemption frame, wherein the preemption frame comprises first indication information used to determine first duration, and the first duration is a time period for which a device other than a first receive device keeps silent after receiving the preemption frame; and
keeping, by the second receive device, silent in the first duration determined based on the first indication information.

16. The method according to claim 15, wherein
the first duration is not less than a sum of a sending time period of the preemption frame and a first time period.

17. The method according to claim 16, wherein the first time period is any one of a point coordination function interframe space PIFS or another preset time period.

18. The method according to any one of claims 15 to 17, wherein the first indication information indicates the first duration.

19. The method according to any one of claims 15 to 17, wherein the first indication information indicates the sending time period of the preemption frame; and
the keeping, by the second receive device, silent in the first duration determined based on the first indication information comprises:
keeping, by the second receive device, silent in the first duration determined based on the first indication information and the first time period.

20. The method according to any one of claims 15 to 19, wherein the first indication information is carried in a duration field of the preemption frame.

21. The method according to any one of claims 15 to 20, wherein the preemption frame comprises a destination address, the destination address comprises an address of the first receive device, and the keeping, by the second receive device, silent in the first duration determined based on the first indication information comprises:
keeping, by the second receive device based on that the destination address is the address of the first receive device different from an address of the second receive device, silent in the first duration determined based on the first indication information.

22. The method according to any one of claims 15 to 21, wherein the method further comprises:
receiving, by the second receive device, a data frame, wherein the data frame comprises second indication information used to determine second duration, and the second duration is a time period for which a device other than the first receive device keeps silent after receiving the data frame; and
keeping, by the second receive device, silent in the second duration determined based on the second indication information.

23. The method according to claim 22, wherein the second duration is not less than a time period of a space between a start moment at which a transmit device sends the data frame and a start moment at which the transmit device receives a response frame; or the second duration is not less than a time period of a space between the start moment at which the transmit device sends the data frame and an end moment at which the transmit device sends an acknowledgment frame, wherein the response frame responds to the data frame, and the acknowledgment frame is an acknowledgment frame for the response frame.

24. The method according to claim 22 or 23, wherein the second indication information is carried in a duration field of the data frame.

25. An apparatus, comprising: a processor, configured to execute computer instructions stored in a memory, to enable the apparatus to perform the method according to any one of claims 1 to 14.

26. An apparatus, comprising: a processor, configured to execute computer instructions stored in a memory, to enable the apparatus to perform the method according to any one of claims 15 to 24.

27. A computer-readable storage medium, configured to store a computer program, wherein the computer program comprises instructions used to implement the method according to any one of claims 1 to 14.

28. A computer-readable storage medium, configured to store a computer program, wherein the computer program comprises instructions used to implement the method according to any one of claims 15 to 24
